# EUROPEAN PATENT SPECIFICATION

(11) **EP 3 282 076 B1**
(45) Date of publication and mention of the grant of the patent: **18.03.2020**
(21) Application number: 15888565.7
(22) Date of filing: 06.05.2015
(51) Int. Cl.: E06B 3/267, E04B 1/76, B29C 44/18

(54) **METHOD FOR FILLING INSULATION MATERIAL USING ADDITIONAL FOAMING**
VERFAHREN ZUM FÜLLEN VON ISOLIERMATERIAL ANHAND VON ZUSÄTZLICHER SCHÄUMUNG
PROCÉDÉ DE REMPLISSAGE D'UN MATÉRIAU D'ISOLATION À L'AIDE D'UN MOUSSAGE SUPPLÉMENTAIRE

(30) Priority: 07.04.2015 KR 20150049030
(43) Date of publication of application: 14.02.2018
(73) Proprietor: Win Garam Co., Ltd., Naju-si, Jeollanam-do 520-831 (KR)
(72) Inventor: KIM, Gi-Hong, Daegu 706-220 (KR); AN, Jae-Jung, Gwangju 506-775 (KR); LEE, Chang-Seop, Daegu 703-847 (KR); LEE, Hun Goo, Naju-si Jeollanam-do 520-831 (KR); LEE, Hyung-Ju, Gwangju 503-854 (KR); CHOI, Go-Bong, Gyeongju-si Gyeongsangbuk-do 780-902 (KR)
(74) Representative: Peters, Sebastian Martinus
(86) International application number: PCT/KR2015/004517
(87) International publication number: WO 2016/163580

(56) References cited:
- WO-A1-03/089221
- WO-A2-99/35353
- JP-A- H 085 232
- KR-A- 950 026 889
- KR-A- 19980 019 268
- KR-A- 20020 023 723

## Description

### TECHNICAL FIELD

The present invention relates to a method of easily filling an inside of a frame with a thermal insulation material formed as a foamed molded product by additional foaming so that a gap is not formed between the frame and the thermal insulation.

### BACKGROUND ART

Fittings refer to windows installed at wall structures of buildings or a variety of windows or doors installed at openings such as exits and the like, to block an inside of a building from the outside. Such fittings have a structure in which a blocking plate formed of glass or the like is fitted into a fitting frame.

In addition, a fitting installed at a window and having an opening/closing structure includes a window frame including a plurality of rails in a length direction and window sashes installed at the rails to be opened or closed.

Meanwhile, as materials of fitting frames used in these fittings, synthetic resin materials or metal materials are currently mainly used. Such synthetic resin materials have excellent thermal insulation performance and are easy to mass-produce, but are disadvantageous in that these materials themselves have a high elasticity, a low strength, and poor fire resistance, and release toxic gases when fire occurs.

Fittings made of a metal material have advantages such as high strength, high durability, and high fire resistance, while having high thermal conductivity, resulting in large heat loss via a fitting frame, and causing the occurrence of condensation at the fitting frame due to a difference between indoor and outdoor temperatures.

To improve thermal insulation properties, soundproof properties, or the like of architectural frames including these metal fitting frames, methods of improving thermal insulation properties, sound absorbing properties, or the like by filling an inside of an architectural frame with a filler such as a foaming material, or the like have been developed.

As the most basic method of filling a filler, a foamed molded product with high thermal insulation, such as expanded polystyrene (EPS), or the like, is fitted into an empty space of a fitting frame, but it is not easy to mold or cut a foamed molded product to fit the size of an empty space. In addition, when the size of a foamed molded product is too large because an operator wrongly measures the volume of a frame or incorrectly cuts the foamed molded product, it is difficult to insert the foamed molded product into the frame or problems such as damage to a surface of the foamed molded product due to surface friction during the insertion process, and the like, occur. In addition, even though the size of the foamed molded product is too small or adequate, a gap is formed between the foamed molded product and the frame during the insertion process, resulting in deterioration of thermal insulation properties and soundproof properties and the occurrence of condensation or the like.

As another method of filling an inside of a building frame with a filler, the inside of the building frame may be filled with a foamable material such as urethane, foamable polystyrene beads, or the like, followed by foaming. In this case, when the foamable material is used in an excess amount due to an operator error, a convex portion is formed at the frame, and thus the frame has to be removed and reconstructed, resulting in wasted cost. When the foamable material is used in an insufficient amount, it is impossible to sufficiently fill the frame therewith, and thus a gap is formed therebetween, resulting in the occurrence of cracks, condensation, or the like after a finishing process, and, accordingly, problems such as corrosion of the inside of a door frame, and the like occur.

As another method of filling a filler, there is a method of using a fluidic particulate thermal insulation material. For example, Korean Patent Application Publication No. 10-2013-0097029 discloses a method of filling a hollow part of a frame for fittings with a foamed thermal insulation material in an unmolded pre-foamed particle state by forming an inlet for the thermal insulation material and an outlet for air bubbles at the hollow part of the frame, filling the foamed thermal insulation material via an insertion member coupled to the inlet and the outlet using spray nozzles, and closing the inlet and the outlet. However, even when this method is used, a process of filling the prefoamed particles or a fluidic material such as a liquid is complicated. In addition, when the prefoamed particles are used, a gap is formed between the particles, and thus sufficient thermal insulation effects cannot be obtained.

As such, a process of filling an inside of a frame having a long length and a narrow hollow part formed therein, e.g., a frame for fittings, with a filler such as a thermal insulation material without a gap therebetween remains complicated and difficult to date.

It is noted that a frame having a hollow part therein, which the hollow part is filled with a foamed thermal insulation material is, for example, disclosed in WO 99/35353 A2 and in WO 03/089221 A1.

### PRIOR ART REFERENCES

(Patent Document 1) Korean Utility Model Registration No. 20-0394869 (registered on August 30, 2005).
(Patent Document 2) Korean Utility Model Publication No. 1989-0010831 (Published on July 11, 1989).

### DISCLOSURE

### TECHNICAL PROBLEM

Therefore, the present invention has been made in view of the above problems, and it is one object of the present invention to provide a method of easily filling a hollow part of a frame with a thermal insulation material without formation of a space between the frame and the thermal insulation material.

### TECHNICAL SOLUTION

In accordance with one aspect of the present invention, provided is
a method of filling an inside of a frame with a thermal insulation material, including:
a thermal insulation material preparation step to prepare a thermal insulation material having a smaller size than that of a hollow part of a frame to be filled with the thermal insulation material and formed as a foamed molded product;
a moisture addition step to add moisture to a surface of the thermal insulation material;
a thermal insulation material insertion step to insert the moisture-added thermal insulation material into the hollow part of the frame; and
an additional foaming and expansion step to expand the thermal insulation material via additional foaming of the thermal insulation material formed as a foamed molded product inside the frame by heating the frame into which the thermal insulation material is inserted.

Preferably, in the moisture addition step, a water-based adhesive containing water is applied.

### ADVANTAGEOUS EFFECTS

According to the method of the present invention as described above, a thermal insulation material having a smaller volume than that of a hollow part of an external frame and formed as a foamed molded product is used, and a water-based adhesive applied on a surface of the thermal insulation material and containing moisture acts as a lubricant, and thus friction occurring when the thermal insulation material is inserted into the frame is low and, accordingly, handling of raw materials and stepwise processes, including the process of insertion into the frame, are easily performed, resulting in excellent workability.

In addition, after the insertion process, the thermal insulation material is expanded via additional foaming so as to completely fill the hollow part of the frame and no gap is formed between the frame and the thermal insulation material, thereby obtaining excellent thermal insulation and soundproofing effects.

### DESCRIPTION OF THE DRAWINGS

FIGS. 1a and 1b are perspective views respectively illustrating states before and after a thermal insulation material according to an exemplary embodiment of the present invention of an architectural frame filled with the thermal insulation material is additionally foamed,
FIGS. 2a and 2b are enlarged configuration views illustrating essential parts of portions A and B, respectively, of FIG. 1,
FIG. 3 is a flowchart illustrating whole processes of a method of filling a thermal insulation material by additional foaming, according to an exemplary embodiment of the present invention.

### BEST MODE

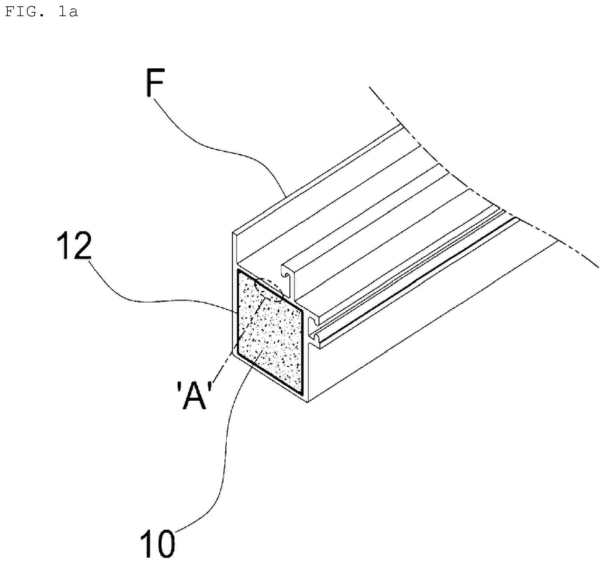

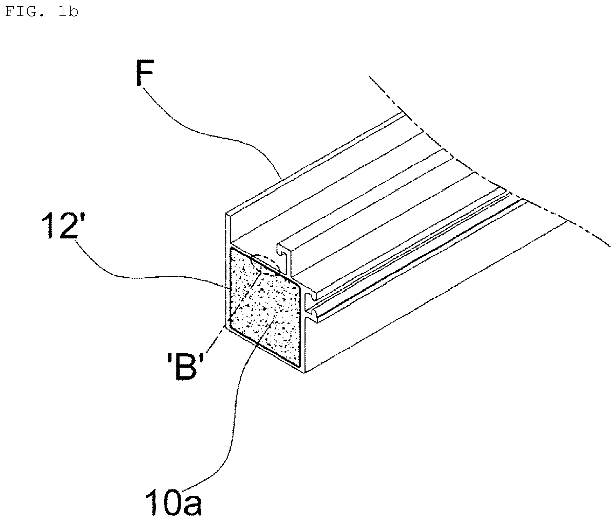

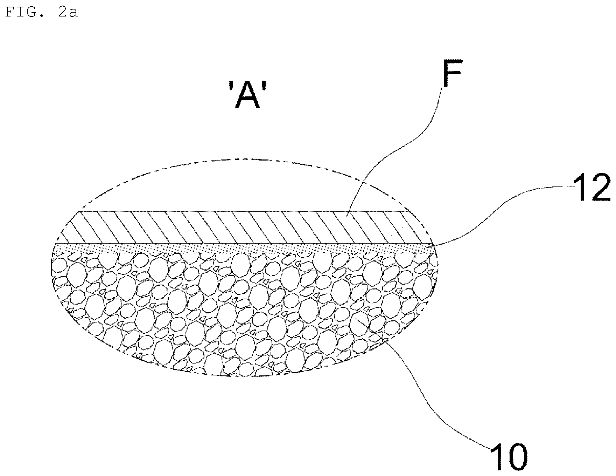

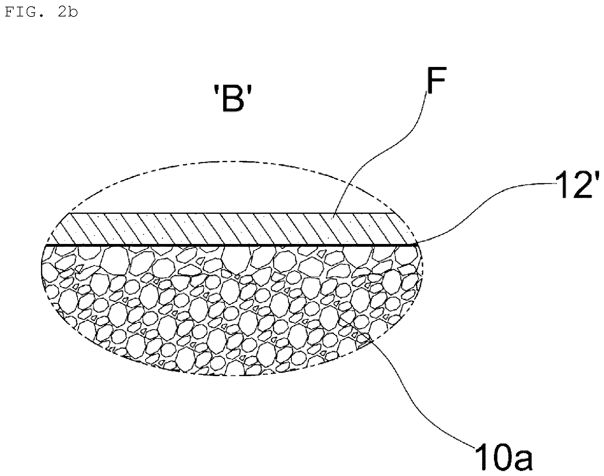

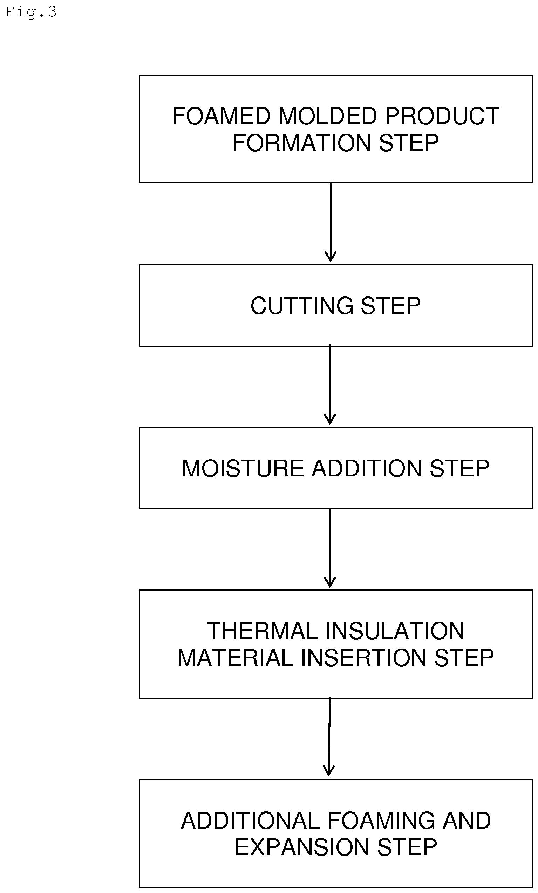

FIGS. 1a and 1b are perspective views respectively illustrating states before and after a thermal insulation material according to an exemplary embodiment of the present invention of an architectural frame filled with the thermal insulation material is additionally foamed. FIGS. 2a and 2b are enlarged configuration views illustrating essential parts of portions A and B, respectively, of FIG. 1. FIG. 3 is a flowchart illustrating whole processes of a method of filling a thermal insulation material by additional foaming, according to an exemplary embodiment of the present invention. Hereinafter, the present invention will be described in more detail with reference to the accompanying drawings.

As illustrated in FIGS. 1a and 1b, the present invention relates to a method of filling an inside of a frame F with a thermal insulation material 10 or 10a.

In the present invention, the frame F is not particularly limited, but, as illustrated in the drawings, in particular, a case, in which the inside of the frame F having a large length and a narrow hollow part and made of a metal material such as an aluminum profile for fittings is filled with the thermal insulation material 10 or 10a, has effectiveness.

Referring to FIG. 3, the method according to the present invention broadly includes: a thermal insulation material preparation step to prepare a thermal insulation material having a smaller size than that of a hollow part of a frame to be filled with the thermal insulation material and formed as a foamed molded product; a moisture addition step to add moisture to a surface of the thermal insulation material; a thermal insulation material insertion step to insert the moisture-added thermal insulation material into the hollow part of the frame; and an additional foaming and expansion step to expand the thermal insulation material via additional foaming of the thermal insulation material formed as a foamed molded product inside the frame by heating the frame into which the thermal insulation material is inserted.

In detail, first, in the thermal insulation material preparation step, the thermal insulation material formed as a foamed molded product so as to be easily inserted into the hollow part to match the shape of the frame F to be filled using a foamable resin is prepared.

At this time, the thermal insulation material 10 may be prepared into a shape corresponding to that of the frame F by foaming a foamable resin after being put into a molding frame. However, preferably, a foamable resin is put into a molding frame and subjected to foaming by heating with steam to obtain a block-shaped foamed molded product (foamed molded product formation step), and the block-shaped foamed molded product is cut into a size a bit smaller than that of the hollow part of the frame F to fit into the hollow part of the frame F to obtain the thermal insulation material 10 formed as a foamed molded product to fill the hollow part of the frame F (cutting step).

The foamable resin put into a molding frame to be foamed includes a known particulate foamable resin such as expanded polystyrene-based resins, expanded polypropylene, or expanded polyethylene. A method of forming a foamed molded product using foamable resin particles may be performed by a well-known method.

For example, bead-type foamable resin particles may be directly put into a molding frame and foamed. However, preferably, pre-foamed particles having foamability are obtained by foaming foamable resin particles (pre-foaming step), and the pre-foamed particles are aged and dried, and then injected into a molding frame and foam-molded to obtain a foamed molded product having a shape corresponding to that of the hollow part of the frame F or a block-shaped foamed molded product (foam-molding step).

In the foam-molding step, high-temperature and high-pressure steam is injected into a molding frame to heat the pre-foamed particles, thereby obtaining a foamed molded product in an agglomerate form in which surfaces of foamed particles are fused to one another.

When the block-shaped foamed molded product is obtained, the block-shaped foamed molded product is cut into size corresponding to the hollow part of the frame F to obtain the thermal insulation material 10 formed as a foamed molded product to fill the inside of the frame F.

Referring to FIGS. 1a and 2a, the thermal insulation material 10 formed as a foamed molded product has a sufficiently smaller volume than that of the hollow part such that a gap is sufficiently formed between inner walls of the frame F and the thermal insulation material 10, and thus, when a subsequent process of inserting the thermal insulation material 10 into the frame F is performed, surface friction between the thermal insulation material 10 and the frame F is low, thus facilitating the insertion process.

When the thermal insulation material 10 having a shape corresponding to that of the hollow part of the frame F is prepared, moisture is added to the surface of the thermal insulation material 10 (moisture addition step).

Moisture evaporates by heating in a subsequent additional foaming and expansion step, and thus acts as a supply of moisture when additional foaming of the foamed molded product proceeds, also uniformly transmits heat to the foamed molded product, and prevents the thermal insulation material 10 formed as the foamed molded product from being contracted or deformed by overheating of the frame F made of a metal material.

Preferably, instead of simply adding the moisture in a water form such as purified water, a moisture-containing adhesive, i.e., a water-soluble adhesive, or a water-based adhesive 12 such as an emulsion-type adhesive using water as a dispersion medium is applied onto the thermal insulation material 10 by coating or spraying.

Examples of the water-based adhesive 12 include, but are not limited to, acryl-based adhesives such as alkylacrylate, glycidylmethacrylate, and hydroxyl-alkylacrylate, ethylene vinyl acetate (EVA) adhesives, polyvinylacetate-based adhesives, polyvinylalcohol-based adhesives, and silicate-based inorganic adhesives.

As such, when the water-based adhesive 12 is used, the adhesive acts as a lubricant, and thus the thermal insulation material 10 may be easily inserted into the frame F, may prevent the surface of the thermal insulation material 10 from being damaged by friction, and may also prevent the inserted thermal insulation material 10 from escaping from the frame F to the outside due to the viscosity of the water-based adhesive 12.

The moisture (water-based adhesive)-added thermal insulation material 10 is inserted into the hollow part of the frame F as described above (thermal insulation material insertion step).

As illustrated in FIG. 2a, since the thermal insulation material 10 formed as a foamed molded product is smaller than the hollow part of the frame F as described above, a gap is formed between the thermal insulation material 10 and the inner walls of the frame F, and moisture from the added water-based adhesive 12 is present in the gap.

The frame F is put in a heating member such as a thermal chamber and heated in a state in which the thermal insulation material 10 is inserted into the frame F. The temperature of the frame F is raised by heating and the moisture of the water-based adhesive 12 applied to the surface of the thermal insulation material 10 evaporates and, as a result, vapor occurs. When the vapor and heat are applied, the foamed molded product is additionally foamed by a foamable agent remaining in the thermal insulation material 10 formed as the foamed molded product and, consequently, the thermal insulation material 10 is expanded.

At this time, the thermal insulation material 10 is inserted into the frame F, and thus a degree to which the thermal insulation material 10 is foamed and expanded is restricted by the frame F, and thus, as illustrated in FIGS. 1b and 2b, the additionally foamed thermal insulation material 10a is expanded, thereby filling a gap between the inner walls of the frame F and the thermal insulation material 10a, and thus closely contacts the inner walls of the frame F (additional foaming and expansion step).

In addition, while moisture evaporates by additional foaming, as illustrated in FIG. 2b, the adhesive 12 applied to the surface of the thermal insulation material 10 is solidified, thereby forming an adhesive layer 12' to fixedly adhere the additionally foamed thermal insulation material 10a to the inner walls of the frame F.

As such, when the additionally foamed thermal insulation material 10a is closely fixed to the inner walls of the frame F, hermeticity between the foamed thermal insulation material 10a and the frame F deteriorates, and thus the occurrence of problems such as the formation of condensation, cracks, or the like at an outer side of the frame F may be prevented, thereby obtaining excellent thermal insulation and soundproofing effects.

The architectural frame filled with a thermal insulation material is manufactured by additional foaming after filling the frame with the thermal insulation material formed as a foamed molded product as described above.

The thermal insulation material 10 is additionally foamed in a foamed molded product state, inside the architectural frame F, and thus is expanded to fit into the hollow part of the architectural frame F and, consequently, closely contacts inner walls of the architectural frame, whereby excellent thermal insulation properties and excellent sound absorbing properties may be obtained.

In addition, the adhesive layer 12' is formed between the inner walls of the architectural frame F and the thermal insulation material 10a as a foamed molded product by solidification of the water-based adhesive, thereby increasing close contact therebetween.

The architectural frame F may be used for a variety of applications. As a representative example, the architectural frame F may be used as a fitting frame by filling an inside of a metal material profile formed by extrusion molding or the like of aluminum and having a hollow part therein with a thermal insulation material.

Meanwhile, an inner circumferential surface of the frame F may be coated with a polypropylene resin composition with high resistance to external impact or high impact resistance to the external environment. Such polypropylene resin composition may include a polypropylene random block copolymer consisting of 75 wt% to 95 wt% of an ethylene-propylene-α-olefin random copolymer and 5 wt% to 25 wt% of an ethylene-propylene block copolymer wherein the amount of ethylene is 20 wt% to 50 wt%.

As described above, the polypropylene random block copolymer may include 75 wt% to 95 wt% of an ethylene-propylene-α-olefin random copolymer and 5 wt% to 25 wt% of an ethylene-propylene block copolymer. When the amount of the ethylene-propylene-α-olefin random copolymer is less than 75 wt%, rigidity deteriorates, and, when the amount of the ethylene-propylene-α-olefin random copolymer is greater than 95 wt%, impact resistance deteriorates. When the amount of the ethylene-propylene block copolymer is less than 5 wt%, impact resistance deteriorates, and, when the amount of the ethylene-propylene block copolymer is greater than 25 wt%, rigidity deteriorates. The ethylene-propylene-α-olefin random copolymer includes 0.5 wt% to 7 wt% of ethylene and 1 wt% to 15 wt% of α-olefin having 4 to 5 carbon atoms, maintains mechanical rigidity of the polypropylene resin composition and enhances thermal resistance thereof, and is effective in maintaining blush resistance of the polypropylene resin composition. The amount of ethylene is preferably in the range of 0.5 wt% to 5 wt%, and more preferably, in the range of 1 wt% to 3 wt%. When the amount of ethylene is less than 0.5 wt%, blush resistance deteriorates, and, when the amount of ethylene is greater than 7 wt%, the crystallinity and rigidity of resin deteriorate. In addition, the term "α-olefin" as used herein refers to α-olefins except for ethylene and propylene, and the α-olefin is preferably butene. In addition, when the number of carbon atoms of the above-described α-olefin is less than 4 or greater than 5, the α-olefin has low reactivity with monomers in preparation of a random copolymer, and thus it is difficult to prepare a copolymer.

In addition, the ethylene-propylene-α-olefin random copolymer may include 1 wt% to 15 wt%, preferably, 1 wt% to 10 wt%, and more preferably, 3 wt% to 9 wt%, of α-olefin. When the amount of the α-olefin is less than 1 wt%, crystallinity increases more than required, and thus transparency is deteriorated, and, when the amount of the α-olefin is greater than 15 wt%, crystallinity and rigidity deteriorate and, accordingly, thermal resistance is significantly decreased. In addition, the ethylene-propylene block copolymer includes 20 wt% to 50 wt% of ethylene, imparts impact resistance properties to the polypropylene resin composition, and is micro-dispersible and thus simultaneously imparts blush resistance and transparency. The amount of the ethylene is preferably in the range of 20 wt% to 40 wt%. When the amount of the ethylene is less than 20 wt%, impact resistance may deteriorate, and, when the amount of the ethylene is greater than 50 wt%, impact resistance and blush resistance may deteriorate.

As such, since the inner circumferential surface of the frame F is coated with the polypropylene resin composition with high resistance to external impact or high impact resistance to the external environment, impact resistance and blush resistance of the frame F may be enhanced.

In addition, the frame F may include, on an outer surface thereof, a coating layer coated with a coating composition for contamination prevention to effectively prevent contaminants from being adhered to the outer surface of the frame F and effectively remove contaminants therefrom. The coating composition for contamination prevention includes boric acid and sodium carbonate in a molar ratio of 1:0.01 to 1:2, and the total amount of boric acid and sodium carbonate ranges from 1 wt% to 10 wt% with respect to a total aqueous solution. In addition, sodium carbonate or calcium carbonate may be used as a material for improving coating properties of the coating layer, but sodium carbonate is preferably used. The molar ratio of boric acid to sodium carbonate may be 1:0.01 to 1:2. When the molar ratio of boric acid to sodium carbonate is outside the above range, coating properties thereof on a base may deteriorate or absorption of moisture onto the surface of the coating layer is increased after coating, resulting in removal of the coating layer.

The amounts of boric and sodium carbonate may range from 1 wt% to 10 wt% with respect to the total amount of the aqueous solution. When the amounts of boric and sodium carbonate are less than 1 wt%, coating properties thereof on a base deteriorate, and, when the amounts of boric and sodium carbonate are greater than 10 wt%, crystal deposition due to increase in the thickness of the coating layer easily occurs.

Meanwhile, the coating composition for contamination prevention may be coated on a base by spray coating. In addition, the thickness of the final coating layer on the base may range from 500 Å to 2,000 Å, more preferably, from 1,000 Å to 2,000 Å. When the thickness of the coating layer is less than 500 Å, the coating layer is degraded when high-temperature heat treatment is performed. When the thickness of the coating layer is greater than 2,000 Å, crystal deposition of the surface of the coating easily occurs.

In addition, the coating composition for contamination prevention may be prepared by adding 0.1 moles of boric acid and 0.05 moles of sodium carbonate to 1,000 ml of distilled water and stirring the resulting solution.

As such, the outer surface of the frame F is coated with a contamination prevention coating to effectively prevent contaminants from being adhered thereto and effectively remove contaminants, and thus an effect of preventing the frame F from being contaminated may be enhanced.

## Claims

1. A method of filling an inside of a frame (F) with a thermal insulation material by additional foaming, the method comprising:
a thermal insulation material preparation step to prepare a thermal insulation material (10, 10a) having a smaller size than that of a hollow part of a frame (F) to be filled with the thermal insulation material (10, 10a) and formed as a foamed molded product;
a moisture addition step to add moisture to a surface of the thermal insulation material (10, 10a);
a thermal insulation material insertion step to insert the moisture-added thermal insulation material (10, 10a) into the hollow part of the frame (F); and
an additional foaming and expansion step to expand the thermal insulation material (10, 10a) via additional foaming of the thermal insulation material formed as a foamed molded product inside the frame (F) by heating the frame into which the thermal insulation material (10, 10a) is inserted.

2. The method according to claim 1, wherein, in the moisture addition step, a water-based adhesive containing water is applied.

3. The method according to claim 1 or 2, wherein the thermal insulation material (10, 10a) preparation step comprises:
a foamed molded product formation step to obtain a block-shaped foamed molded product by foaming a foamable resin via heating with steam; and
a cutting step to cut the block-shaped foamed molded product into a size smaller than that of the hollow part of the frame (F) to fit into the hollow part of the frame (F) to obtain a thermal insulation material formed as the foamed molded product.

4. The method according to claim 3, wherein the foamed molded product formation step comprises:
a pre-foaming step to obtain pre-foamed particles having foamability by foaming foamable resin particles; and
a foam-molding step to obtain a block-shaped foamed molded product by injecting the pre-foamed particles into a molding frame and foaming the pre-foamed particles by heating with steam.

## Patentansprüche

1. Ein Verfahren zum Füllen eines Innenraumes eines Rahmens (F) mit einem Wärmeisolationsmaterial durch zusätzliches Ausschäumen, wobei das Verfahren folgende Schritte aufweist:
einen Schritt zum Herstellen des Wärmeisolationsmaterials, um ein Wärmeisolationsmaterial (10, 10a) herzustellen, das eine Größe aufweist, die kleiner ist als die eines hohlen Teils eines Rahmens (F), welcher mit dem Wärmeisolationsmaterial (10, 10a) zu füllen ist, und welches als ausgeschäumtes Formprodukt gebildet ist;
einen Schritt zum Hinzufügen von Feuchtigkeit, um Feuchtigkeit zu einer Oberfläche des Wärmeisolationsmaterials (10, 10a) hinzuzufügen;
einen Schritt zum Einfügen von Wärmeisolationsmaterial, um das Wärmeisolationsmaterial (10, 10a) mit der hinzugefügten Feuchtigkeit in den hohlen Teil des Rahmens (F) einzufügen; und
einen Schritt zum zusätzlichen Ausschäumen und Ausdehnen, um das Wärmeisolationsmaterial (10, 10a) über zusätzliches Ausschäumen des Wärmeisolationsmaterials, das als ausgeschäumtes Formprodukt gebildet ist, in dem Rahmen (F) auszudehnen, indem der Rahmen, in dem das Wärmeisolationsmaterial (10, 10a) eingefügt ist, erwärmt wird.

2. Das Verfahren gemäß Anspruch 1, wobei bei dem Schritt zum Hinzufügen von Feuchtigkeit ein wasserbasiertes Haftmittel, das Wasser enthält, angewendet wird.

3. Das Verfahren gemäß einem der Ansprüche 1 oder 2, wobei der Schritt zum Herstellen des Wärmeisolationsmaterials (10, 10a) folgende Schritte aufweist:
einen Schritt zum Bilden eines ausgeschäumten Formprodukts, um durch Ausschäumen eines ausschäumbaren Harzes über eine Erwärmung mit Dampf ein blockförmiges ausgeschäumtes Formprodukt zu erhalten; und
einen Schritt zum Schneiden, um das blockförmige ausgeschäumte Formprodukt in eine Größe zu schneiden, die kleiner ist als die des hohlen Teils des Rahmens (F), um in den hohlen Teil des Rahmens (F) zu passen, um ein als das ausgeschäumte Formprodukt gebildetes Wärmeisolationsmaterial zu erhalten.

4. Das Verfahren gemäß Anspruch 3, wobei der Schritt zum Bilden des ausgeschäumten Formprodukts folgende Schritte aufweist:
einen Schritt zum Vorausschäumen, um vorausgeschäumte Partikel mit einer Ausschäumbarkeit zu erhalten, indem ausschäumbare Harzpartikel ausgeschäumt werden; und
einen Schritt zum Schaumformen, um ein blockförmiges ausgeschäumtes Formprodukt zu erhalten, indem die vorausgeschäumten Partikel in einen Formrahmen gespritzt werden und die vorausgeschäumten Partikel durch eine Erwärmung mit Dampf ausgeschäumt werden.

## Revendications

1. Méthode de remplissage d'un intérieur d'un cadre (F) avec un matériau d'isolation thermique par un moussage supplémentaire, la méthode comprenant :
une étape de préparation de matériau d'isolation thermique pour préparer un matériau d'isolation thermique (10, 10a) ayant une taille plus petite que celle d'une partie creuse d'un cadre (F) à remplir avec le matériau d'isolation thermique (10, 10a) et formé en tant que produit moulé moussé ;
une étape d'ajout d'humidité pour ajouter de l'humidité à une surface du matériau d'isolation thermique (10, 10a) ;
une étape d'insertion de matériau d'isolation thermique pour insérer le matériau d'isolation thermique à humidité ajoutée (10, 10a) dans la partie creuse du cadre (F) ; et
une étape d'expansion et de moussage supplémentaire pour expanser le matériau d'isolation thermique (10, 10a) via un moussage supplémentaire du matériau d'isolation thermique formé en tant que produit moulé moussé à l'intérieur du cadre (F) en chauffant le cadre dans lequel le matériau d'isolation thermique (10, 10a) est inséré.

2. Méthode selon la revendication 1, dans laquelle, dans l'étape d'ajout d'humidité, un adhésif à base d'eau contenant de l'eau est appliqué.

3. Méthode selon la revendication 1 ou 2, dans laquelle l'étape de préparation du matériau d'isolation thermique (10, 10a) comprend :
une étape de formation de produit moulé moussé pour obtenir un produit moulé moussé en forme de bloc en moussant une résine moussable via chauffage avec de la vapeur ; et
une étape de coupe pour couper le produit moulé moussé en forme de bloc en une taille plus petite que celle de la partie creuse du cadre (F) pour l'ajuster dans la partie creuse du cadre (F) pour obtenir un matériau d'isolation thermique formé en tant que produit moulé moussé.

4. Méthode selon la revendication 3, dans laquelle l'étape de formation de produit moulé moussé comprend :
une étape de pré-moussage pour obtenir des particules pré-moussées ayant une aptitude au moussage en moussant des particules de résine moussable ; et
une étape de moulage de mousse pour obtenir un produit moulé moussé en forme de bloc en injectant les particules pré-moussées dans un cadre de moulage et en moussant les particules pré-moussées par chauffage avec de la vapeur.
